Europäisches Patentamt

European Patent Office

Office européen des brevets

(11) Numéro de publication: **0 464 925 B1**

# FASCICULE DE BREVET EUROPEEN

(45) Date de publication du fascicule du brevet: **08.11.95**
(51) Int. Cl.⁶: **G01G 19/56**, H05B 3/74, F24C 15/10

(21) Numéro de dépôt: **91201636.7**

(22) Date de dépôt: **27.06.91**

(54) **Table chauffante.**

(30) Priorité: **06.07.90 FR 9008597**

(43) Date de publication de la demande:
**08.01.92 Bulletin 92/02**

(45) Mention de la délivrance du brevet:
**08.11.95 Bulletin 95/45**

(84) Etats contractants désignés:
**DE FR GB IT**

(56) Documents cités:
**EP-A- 0 005 486
US-A- 4 121 049
US-A- 4 476 946
US-A- 4 784 052
US-A- 4 816 647**

(73) Titulaire: **LABORATOIRES D'ELECTRONIOUE PHILIPS
22, Avenue Descartes
F-94450 Limeil-Brévannes (FR)**

(84) Etats contractants désignés:
**FR**

(73) Titulaire: **Philips Electronics N.V.
Groenewoudseweg 1
NL-5621 BA Eindhoven (NL)**

(84) Etats contractants désignés:
**DE GB IT**

(72) Inventeur: **Hazan, J. P., Société Civile S.P.I.D.
156, Boulevard Haussmann
F-75008 Paris (FR)**
Inventeur: **Polaert, R., Société Civile S.P.I.D.
156, Boulevard Haussmann
F-75008 Paris (FR)**
Inventeur: **Delmas, G., Société Civile S.P.I.D.
156, Boulevard Haussmann
F-75008 Paris (FR)**

(74) Mandataire: **Landousy, Christian et al
Société Civile S.P.I.D.
156, Boulevard Haussmann
F-75008 Paris (FR)**

**Description**

Table chauffante comportant une pluralité d'éléments chauffants activés par des commandes de fonctionnement qui modifient la puissance électrique dissipée dans les éléments chauffants en fonction de charges placées au-dessus desdits éléments chauffants.

Les tables chauffantes concernées ci-après sont préférentiellement mais non exclusivement celles à usage domestique. Elles sont constituées de plusieurs postes de cuisson localisés destinés à recevoir des ustensiles de cuisine en vue de chauffer leur contenu. Les moyens de chauffage sont constitués généralement par des éléments à chauffage par effet Joule, par rayonnement ou par induction. Lors de leur utilisation il est nécessaire de mettre en marche l'élément chauffant, de régler, éventuellement à plusieurs reprises, la puissance électrique consommée puis de mettre à l'arrêt l'élément chauffant en fin d'utilisation.

Lorsque l'ustensile est enlevé pour un court instant, l'utilisateur n'éprouve pas nécessairement la nécessité d'arrêter le fonctionnement de l'élément chauffant. Ceci peut avoir différentes conséquences :
- il y a une dissipation inutile d'énergie électrique,
- l'élément chauffant, opérant alors sans charge peut avoir une température difficilement maîtrisable et notamment peut provoquer un rayonnement qui peut gêner voire perturber l'utilisateur par éblouissement ou brûlure.

Il est donc souhaitable de maîtriser le fonctionnement de l'élément chauffant au cours de ces interventions. Mais bien évidemment le fonctionnement des autres éléments chauffants ne doit pas en subir de conséquences.

On connaît par ailleurs le document US 4 476 946 qui concerne une table chauffante pouvant être utilisée en plate-forme de pesage et assurant la régulation de la puissance électrique consommée par plusieurs éléments chauffants agencés dans la plate-forme. Un ou plusieurs éléments chauffants peuvent être montés individuellement sur un système à jauges de contraintes qui fléchissent sous l'action d'une charge placée sur l'élément chauffant. Ces jauges de contraintes sont connectées électriquement selon un montage en pont de Wheatstone et permettent ainsi de déterminer le poids de la charge placée sur l'élément chauffant concerné. Cette mesure peut être utilisée pour contrôler par exemple le taux d'évaporation de la charge lorsque celle-ci est par exemple une casserole renfermant un liquide en régulant la puissance électrique consommée par l'êlément chauffant.

Mais une telle table chauffante présente des inconvénients pour son nettoyage. En effet les éléments chauffants et les postes de cuisson sont mobiles par rapport à la plate-forme ce qui nécessite un certain jeu par lequel des infiltrations se produisent inévitablement. Cette table chauffante n'est donc pas en accord avec la demande actuelle qui attache une grande importance à ces facilités de nettoyage.

On connaît également le document US 4 121 049 qui décrit un système à jauges de contraintes pour la mesure d'une force et celle de la position de la force appliquée. L'utilisation de ce système de mesure de coordonnées est prévu entre autres dans les domaines des enregistreurs X-Y, des tubes cathodiques, des mesureurs de coordonnées X, Y, des dispositifs d'affichage contrôlés par ordinateur. Il s'agit là de domaines très spécialisés qui sont très éloignés des préoccupations d'un homme du métier des appareils de cuisson qui doit rechercher des solutions simples et à coût réduit.

Le problème posé est donc de concilier un nettoyage facile et une détection de la présence ou de l'absence de charge sur un élément chauffant quelconque afin de l'identifier pour pouvoir intervenir sur ses conditions de fonctionnement.

La solution consiste en ce que les éléments chauffants sont recouverts d'une plaque qui est solidaire de modules à jauges de contraintes qui détectent les forces qui sont appliquées à la plaque sous l'action desdites charges, des moyens de commande identifiant, en calculant le barrycentre desdites forces, un quelconque élément chauffant ayant subi une variation de sa dite charge, les moyens de commande agissant sur les commandes de fonctionnement de l'élément chauffant identifié pour intervenir sur son alimentation en énergie électrique.

Ainsi à partir de la modification du poids de la charge il est possible de localiser l'endroit où se trouve (ou se trouvait) cette charge sur la plaque. La localisation de l'élément chauffant placé en dessous peut être aisément déterminée par les moyens de commande. Préférentiellement il s'agit d'une plaque vitrocéramique. Celle-ci est un bon isolant thermique. De plus les modules à jauges de contrainte sont éloignés des foyers et un écran thermique accroît la protection thermique.

Il est possible que les moyens de commande coupent ou réduisent l'alimentation en énergie électrique de l'élément chauffant identifié lorsque la charge placée au-dessus de lui est enlevée (variation relative de charge voisine de l'unité). Initialement, à l'aide des commandes de fonctionnement, l'utilisateur arme un relais ou un bouton poussoir (par exemple) qui peuvent être désarmés électroniquement ou électromécaniquement par lesdits moyens de commandes.

Il est également possible que les moyens de commande régulent l'alimentation en énergie électrique de l'élément chauffant identifié lorsque les variations relatives de charge sont faibles. Ceci permet de suivre des processus de cuisson.

Les variations de charge peuvent être déterminées en comparant la valeur de la charge présente à des instants successifs réguliers.

Ainsi la simple action de l'utilisateur consistant à enlever un ustensile va modifier l'état de fonctionnement de la plaque chauffante.

Les modules à jauges de contraintes peuvent avoir différentes dispositions par rapport à la plaque. Ainsi, dans une première disposition mécanique, sans charge extérieure rapportée, la charge principale des jauges de contraintes est formée par le poids de la plaque vitrocéramique. Dans une seconde disposition mécanique, sans charge extérieure rapportée, les modules à jauges de contraintes supportent pratiquement l'ensemble du poids de la table chauffante comprenant non seulement la plaque elle-même mais également les éléments chauffants, lesdits moyens de commande et les organes d'entrée de fonction pour l'utilisateur. Selon cette seconde disposition, les jauges sont toujours chargées, au moins par le poids de la table chauffante. Cette disposition est intéressante lorsque la plaque est supportée par trois jauges de contraintes afin d'étendre l'étendue utile du triangle de sustentation déterminé par les trois modules. Il est également possible de supporter la plaque par quatre modules à jauges de contraintes ce qui définit une surface de sustentation plus étendue au prix d'un léger accroissement du matériel. Il faut alors être vigilant lors du montage pour assurer la mise en appui simultanée des quatre jauges.

Les moyens de commande sont préférentiellement constitués par un microprocesseur qui reçoit des données d'un convertisseur analogique-numérique qui opère sur les signaux électriques délivrés par les jauges de contraintes.

Mais il est possible de simplifier la réalisation en traitant directement les signaux analogiques délivrés par les jauges de contraintes. Ceci permet de simplifier le traitement. Il suffit dans ce cas de privilégier par exemple un élément chauffant en le plaçant plus près d'une des jauges de contraintes que les autres éléments ce qui accroît la sensibilité de détection pour cet élément chauffant. On peut également électroniquement affecter un gain plus élevé à l'amplificateur associé à cette jauge. Pour cela on compare la variation (réduction) de poids détectée par cette jauge à la variation totale de poids. Lorsque le rapport est élevé (par exemple supérieur à 45-50%), les moyens de commandes détectent qu'un objet placé au-dessus de cet élément chauffant a été enlevé et désactivent l'élément chauffant concerné. Les deux modes (traitement analogique ou numérique) peuvent coexister sur une même plaque.

La variation de charge qui agit sur la plaque peut être traitée de façon à délivrer une mesure du poids liée à la variation de charge afin de réaliser une fonction "balance".Dans ce cas la variation de charge, appliquée sur un endroit privilégié ou non de la plaque, est traduite en une mesure de poids à l'aide de moyens qui calculent et affichent le poids de la charge. Cet endroit privilégié peut être situé au-dessus d'un élément chauffant. Le processus de cuisson peut ainsi être suivi. Pour opérer des mesures précises sur des variations de charges faibles les moyens de calcul peuvent permettre d'opérer un tarage de la charge initiale.

La table chauffante est constituée d'une pluralité d'éléments chauffants qui sont localisés sous la plaque. Il est possible qu'un poste de cuisson soit constitué de plusieurs de ces éléments chauffants afin qu'il ait une configuration oblongue par exemple.

Pour disposer d'une gamme étendue de modèles le constructeur peut intervenir sur ces configurations sans qu'il soit nécessaire de modifier l'emplacement des éléments chauffants, simplement par programmation du microprocesseur.

Ainsi les moyens de commande peuvent être programmés pour déterminer l'étendue d'un foyer en regroupant fonctionnellement plusieurs éléments chauffants.

La plaque qui recouvre les éléments chauffants a été présentée jusqu'à présent comme pouvant recevoir les charges placées au-dessus des éléments chauffants. Mais il est également possible qu'elle soit adaptée pour détecter d'autres forces de pression et en particulier celles que peut appliquer l'utilisateur par la pression de la main. Une zone de la table chauffante peut être réservée à cet usage pour permettre à l'utilisateur d'effectuer des commandes manuelles. La plaque peut ainsi présenter au moins une zone de commandes tactiles pour opérer manuellement les commandes de fonctionnement. (Par exemple, commande de puissance et de marche/arrêt des éléments chauffants). C'est la position de la pression, par exemple d'un doigt, qui détermine la commande à effectuer. Cette commande peut également mettre en oeuvre la grandeur de la pression opérée pour déterminer une voie supplémentaire d'introduction des commandes manuelles. La position et/ou la durée et/ou la grandeur de cette pression peut par exemple être liée à la valeur de la puissance électrique consommée par un élément chauffant déterminé. Le constructeur a un libre choix dans le nombre et la disposition des commandes tactiles qui peuvent être placées sur la plaque à l'endroit souhaité. Par programmation il est donc possible au constructeur de reconfigurer la disposition des commandes tactiles à partir d'un modèle de base.

Ces zones de commandes tactiles peuvent être repérées par une technique d'inscription de la plaque.

L'invention sera mieux comprise à l'aide des figures suivantes données à titre d'exemples non limitatifs qui représentent :

figure 1A : une vue schématique d'une table chauffante,

figure 1B : une vue schématique en coupe des organes essentiels d'une table chauffante connue munie d'une plaque vitrocéramique,

figures 2A, 2B, 2C : une représentation de tables chauffantes à trois et quatre modules ainsi qu'un schéma des forces appliquées,

figures 3A, 3B, 3C : des vues schématiques partielles de différents positionnements des modules à jauges de contraintes selon l'invention,

figure 3D : une représentation du déplacement du polygone de sustentation lorsque la charge supportée par les modules à jauges de contrainte est soit la plaque vitrocéramique seule soit l'ensemble de la table chauffante,

figures 4A, 4B, 4C, 4D, 4E : des représentations schématiques d'un module à trois points d'appui et de ses jauges de contraintes,

figure 5, figure 6 : une représentation d'un module à deux points d'appui et d'un module à quatre points d'appui à déformation en S,

figure 7 : un schéma électrique des moyens de commande dans une réalisation à trois modules,

figure 8 : une illustration d'un mode de reconfiguration de la table chauffante,

figures 9A, 9B : deux représentations différentes de commandes manuelles pour l'utilisateur.

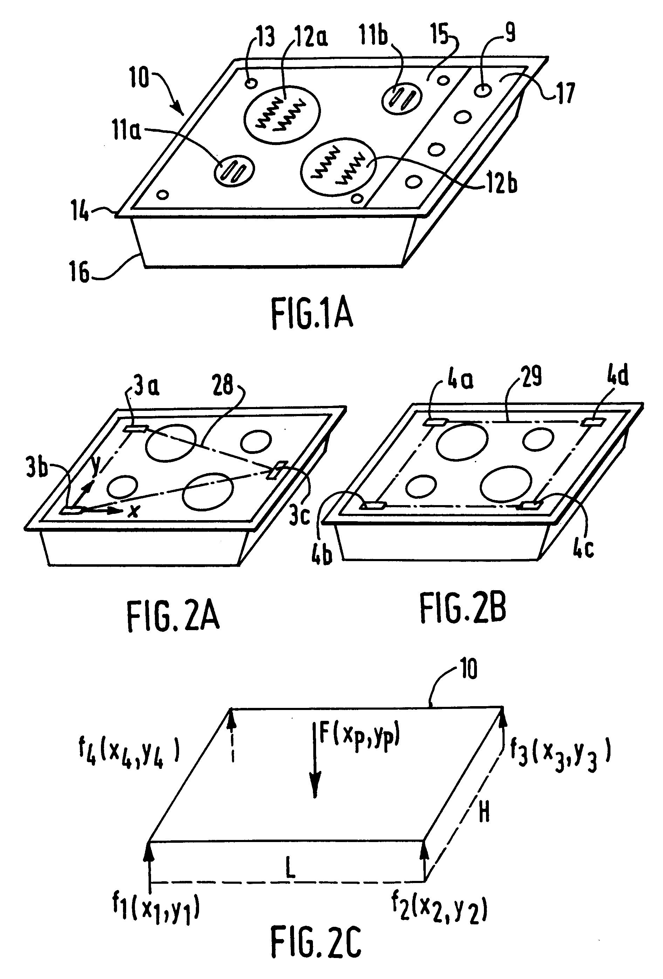

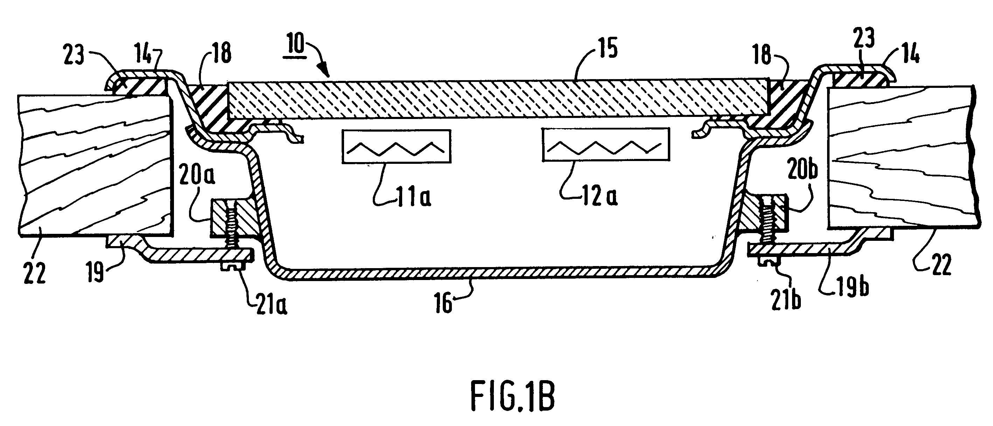

La figure 1A représente une table chauffante 10 comprenant des éléments chauffants 11a, 11b, 12a, 12b disposés sous une plaque vitrocéramique 15 qui est supportée par un cadre métallique 14 et un berceau 16. Une extrémité de la table chauffante 10 dispose d'une zone 17 dans laquelle sont disposées des commandes de fonctionnement 9 utilisées par l'utilisateur pour faire fonctionner la table chauffante. Ces commandes de fonctionnement sont habituellement des boutons 9 opérant en rotation. Des voyants 13 permettent d'indiquer lorsqu'un élément chauffant est en fonctionnement, ou lorsque sa température résiduelle est encore supérieure à une certaine valeur critique.

La figure 1B représente un montage classique d'une table chauffante 10 ayant une plaque vitrocéramique 15 au-dessus d'éléments chauffants 11a, 12a. Cette plaque est fixée de manière étanche au cadre métallique 14 par un joint élastomère 18. Le cadre métallique est solidarisé, par exemple à l'aide de vis, au berceau 16 qui dispose de moyens de fixation formés par exemple de taquets 19a, 19b, d'ergots 20a, 20b et de vis 21a, 21b, moyens qui permettent de solidariser la table chauffante au socle 22 d'un meuble de cuisine. Les éléments chauffants sont solidaires du berceau. Pour assurer l'étanchéité entre le cadre métallique 14 et le socle 22 on y place lors de l'installation un joint d'étanchéité 23 généralement en mousse.

Selon l'invention le montage de la table chauffante est réalisé pour que soit la plaque vitrocéramique seule (éventuellement avec son cadre métallique) soit l'ensemble de la table chauffante soit supporté par des modules à jauges de contraintes.

La configuration de la table chauffante peut être à trois modules à jauges de contrainte 3a, 3b, 3c (figure 2A) ou à quatre modules 4a, 4b, 4c, 4d (figure 2B) ce qui donne au polygone de sustentation la forme respectivement d'un triangle 28 ou d'un rectangle 29.

Lorsqu'une casserole est placée sur la plaque vitrocéramique (par exemple à quatre modules) au-dessus d'un élément chauffant, elle va appliquer une force de pesanteur qui va agir sur les quatre modules qui vont fournir des forces de réaction f1, f2, f3, f4 (figure 2C).

Après une variation des charges, ces forces de réaction vont être modifiées et les quatre modules vont fournir des nouvelles forces de réactions qui vont être exploitées par le microprocesseur pour définir des variations $\Delta f1$, $\Delta f2$, $\Delta f3$, $\Delta f4$. Celles-ci permettent de calculer la variation de la charge totale $\Sigma \Delta f = \Delta f1 + \Delta f2 + \Delta f3 + \Delta f4$ et la position $X_p Y_p$ du barycentre par les équations :

$$X_p = \frac{\Delta f3 + \Delta f4}{\Sigma \Delta f} . L \quad \text{et} \quad Y_p = \frac{\Delta f1 + \Delta f4}{\Sigma \Delta f} . H$$

L et H sont les deux dimensions de la plaque.

En opérant le traitement décrit ci-après, il est surprenant de constater que l'on peut déterminer le centre de gravité non seulement d'un objet qui a été ajouté mais également d'un objet qui a été enlevé et qui n'existe donc plus sur la plaque.

En effet si on compare l'état final à l'état initial on aurait pour un même objet au même endroit des variations de forces opposées en signe mais égales en valeur absolue selon qu'un objet a été enlevé ou ajouté.

Cependant comme indiqué par les équations ci-dessus la position étant donnée par un rapport de variations de forces, l'effet du signe s'annule et on retrouve la même position dans les deux cas. Ainsi le centre de gravité de l'objet enlevé est celui d'un objet qu'il faudrait ajouter à l'état final pour retrouver l'état initial.

Pour détecter la position du centre de gravité (barycentre) de l'objet qui a été mis ou retiré, il faut mémoriser un état antérieur de la plaque (forces appliquées aux jauges de contraintes) puis comparer le nouvel état au précédent pour déterminer la nature et la position du changement opéré. Les signaux électriques en provenance des différents modules à jauges de contraintes sont traités par un microprocesseur qui détermine le barycentre de la charge appliquée ou enlevée et agit sur l'alimentation en énergie électrique de l'élément concerné. Pour cela on repère sur la plaque des zones S1, S2,... au-dessus de chacun des éléments chauffants. Les coordonnées de ces zones sont mémorisées par exemple dans la mémoire du microprocesseur. Après une intervention sur la charge, le microprocesseur détermine, à partir du nouvel et de l'ancien état de la plaque, le centre de gravité de la charge qui a été ajoutée ou enlevée puis détermine s'il se situe dans une de ces zones S1, S2,... .Pour chacune des zones S1, S2,... est également stocké, dans la mémoire du microprocesseur, l'état de la charge P1, P2,... qui lui correspond. Lorsqu'une intervention a été opérée dans une zone déterminée la valeur de la variation de charge qui lui correspond permet de déterminer l'action à entreprendre (arrêter, réduire ou réguler l'élément chauffant) et la valeur de la nouvelle charge affectée à la zone est mise à jour dans la mémoire. Une mise à jour systématique, par exemple périodique, peut également être réalisée. Chaque zone affectée à chaque élément chauffant est ainsi caractérisée par son étendue et la charge présente à un instant donné qui sont mémorisées dans le microprocesseur. Lorsque le centre de gravité de la charge qui a été ajoutée ou enlevée se situe hors de l'une de ces zones cela ne donne pas lieu à des interventions directes sur un élément chauffant.Néanmoins pour ce nouvel état les forces appliquées aux jauges de contraintes sont mises à jour dans la mémoire pour constituer l'état antérieur nécessaire au calcul des variations subséquentes.

Il faut par ailleurs noter que comme on ne met et on n'enlève qu'un objet à la fois on peut non seulement connaître l'état global de la plaque (centre de gravité et poids global des objets sur la plaque) mais également suivre et mémoriser le poids et la position de chaque objet qui demeure sur la plaque.

Il est possible d'agir sélectivement selon l'intensité et la position de la force appliquée en établissant un seuil en deça duquel aucune action ne sera entreprise. Ceci permet de ne pas tenir compte de certaines interventions de l'utilisateur qui ne nécessitent pas d'intervenir sur le fonctionnement des éléments chauffants. Ce seuil permet de tenir compte d'une variation partielle de la charge par exemple l'enlèvement d'un couvercle. Ce seuil peut être réduit voire neutralisé par une commande spécifique pour suivre l'évolution de certains processus de cuisson.

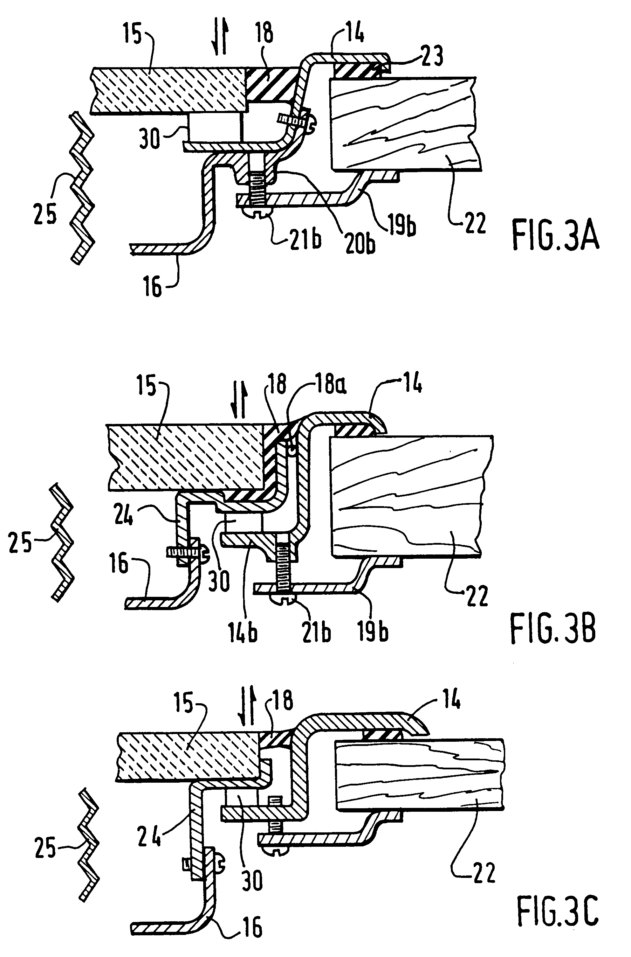

La figure 3A représente la disposition des éléments dans le cas où seule la plaque vitrocéramique est portée par des modules à jauges de contraintes 30. Ces modules sont placés entre le cadre métallique 14 qui est fixe et la plaque vitrocéramique 15 qui est mobile. Pour assurer néanmoins une étanchéité entre ces deux éléments il est nécessaire de placer un joint 18 qui doit dans cette disposition avoir la forme d'une membrane de faible épaisseur pour ne pas entraver les déplacements de la plaque vitrocéramique par rapport au cadre métallique. Les moyens de fixation 19b, 20b, 21b et d'étanchéité 23 ne sont pas modifiés. Un écran thermique 25 permet d'isoler les modules 30 vis à vis des éléments chauffants.

La figure 3B représente un autre montage pour lequel la quasi totalité de la table chauffante est portée par les modules à jauges de contraintes. Le cadre métallique 14 présente alors une assise 14b qui reçoit un module à jauges de contraintes sur lequel porte un autre cadre métallique 24 fixé au berceau 16. L'autre cadre métallique 24 reçoit la plaque vitrocéramique 15. Il améliore la tenue mécanique de la plaque. Le cadre métallique 14 comporte autant d'assises 14b qu'il y a de modules à jauges de contraintes. L'étanchéité entre les parties mobile et fixe est alors assurée entre le cadre métallique 14 et l'autre cadre métallique 24 par exemple par un joint élastomère 18 qui est retenu lors de sa réalisation au moment où il est encore fluide par un organe de retenue 18a, par exemple un joint torique. Le taquet 19b et la vis 21b fixée par exemple dans l'assise 14b assurent la fixation sur socle 22.

La figure 3C représente un autre montage qui diffère du montage de la figure 3B en ce que l'étanchéité est assurée par un joint-membrane 18 placé entre la plaque vitrocéramique 15 et le cadre métallique 14.

Dans les montages des figures 3B et 3C les modules à jauges de contraintes 30 supportent, sans charge extérieure rapportée, à la fois la plaque vitrocéramique, les éléments chauffants, le berceau, l'autre cadre métallique c'est-à-dire pratiquement la totalité du poids de la table chauffante. Ceci peut représenter un poids de l'ordre de 8Kgs ce qui constitue un décalage du zéro pour la détermination des forces appliquées à la plaque vitrocéramique. Ceci est mis à profit pour la détermination de forces de faible intensité appliquée à l'extérieur du polygone de sustentation de la plaque en particulier lorsque celui-ci est un triangle (figure 3D). En effet, lorsqu'une charge importante est placée en P' à l'extérieur du triangle de sustentation (42) il peut apparaître un délestage du module à jauges de contraintes opposé 3b entraînant une perte d'appui sur ce module. Le fait que la totalité de la table chauffante est supportée par les modules, donc avec une charge totale centrée en P1, permet avantageusement à tous les modules d'opérer toujours en compression même avec des charges dont le centre de gravité se situe assez écarté du polygone de sustentation. Le polygone de sustentation utile est alors limité par un triangle homothétique du triangle de sustentation au repos et par les bords de la plaque (polygone 43). Ceci accroît la surface utilisable de la table chauffante dans laquelle il est possible de détecter une variation de charge.

Dans les configurations où il peut apparaître une perte d'appui (par exemple, poids important placé à l'extérieur du triangle de sustentation et/ou triangle de sustentation de faible dimension), il est possible de monter le module à jauges de contrainte dans un étrier solidaire de la plaque vitrocéramique afin de pouvoir solliciter la jauge dans les deux directions (en appui et en traction).

La figure 4A représente un mode de disposition d'un module de jauges placé entre une partie A et une partie B qui peuvent être constituées respectivement :

.  pour la figure 3A : par la plaque vitrocéramique 15 et le cadre métallique 14,

.  pour les figures 3B et 3C : par l'autre cadre métallique 24 et l'assise 14b.

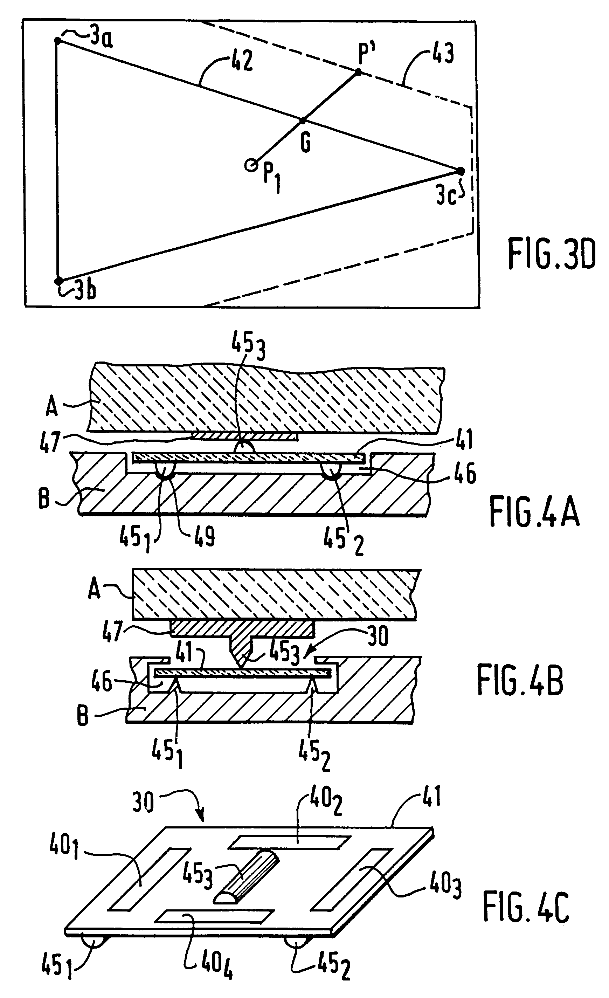

Le module 30 comprend (figure 4C) une plaquette 41 par exemple en alumine sur laquelle sont disposées des résistances $40_1$, $40_2$, $40_3$, $40_4$ par exemple déposées en couches épaisses par sérigraphie. Aux extrémités de la face inférieure de la plaquette 41 sont disposés deux appuis $45_1$ et $45_2$. Sur la face supérieure de la plaquette 41 sensiblement vers le centre, c'est-à-dire entre les deux appuis $45_1$ et $45_2$, est disposé un autre appui $45_3$. La distance entre les appuis est alors fixe. Ainsi la plaquette 41 peut se déformer lorsqu'une force est appliquée sur l'appui $45_3$ et qu'une réaction s'opère par les appuis $45_1$, $45_2$ par le support sur lequel est posée la plaquette 41. La distance verticale entre le centre de la face inférieure de la plaquette 41 et la partie B peut ainsi être pré-ajustée avec précision afin de limiter la course de la plaquette 41 et d'éviter ainsi qu'elle se casse. Les résistances $40_1$ à $40_4$ sont reliées entre elles en pont de Wheatstone de manière à ce que le module soit en premier lieu sensible à la contrainte appliquée et en second lieu peu sensible aux variations de température. Le module 30 est alors disposé selon la figure 4A de sorte que les appuis inférieurs $45_1$, $45_2$ portent sur la partie B et que l'appui supérieur $45_3$ porte sur la partie A éventuellement dans des logements 49. Le module 30 est placé dans un logement 46 ménagé dans la partie B afin de limiter son déplacement latéral. Lorsque la partie A est la plaque vitrocéramique préférentiellement on dispose une protection métallique ou isolante 47 qui a l'avantage de répartir la force sur la plaque vitrocéramique et d'éviter des détériorations locales et faire écran thermique. Bien évidemment l'appui $45_3$ peut également être solidaire de la partie A et désolidarisé de la plaquette 41.

La figure 4B représente une autre disposition du module 30 placé dans le logement 46. Dans ce cas le logement 46 est ménagé dans la partie B qui présente les deux appuis $45_1$ et $45_2$ sur lesquels appuie la plaquette 41. L'appui $45_3$ est porté par la plaque de protection 47 qui est fixé à la partie A.

La figure 4D représente une autre disposition de résistances $40_1$ à $40_4$ sur la plaquette 41 c'est-à-dire sensiblement du même côté de la plaquette 41. Cette disposition présente l'avantage par rapport à celle de la figure 4C que l'axe du pivot $45_3$ ne traverse pas la zone des résistances et que la sensibilité de jauge est peu affectée par la position exacte de ce pivot.

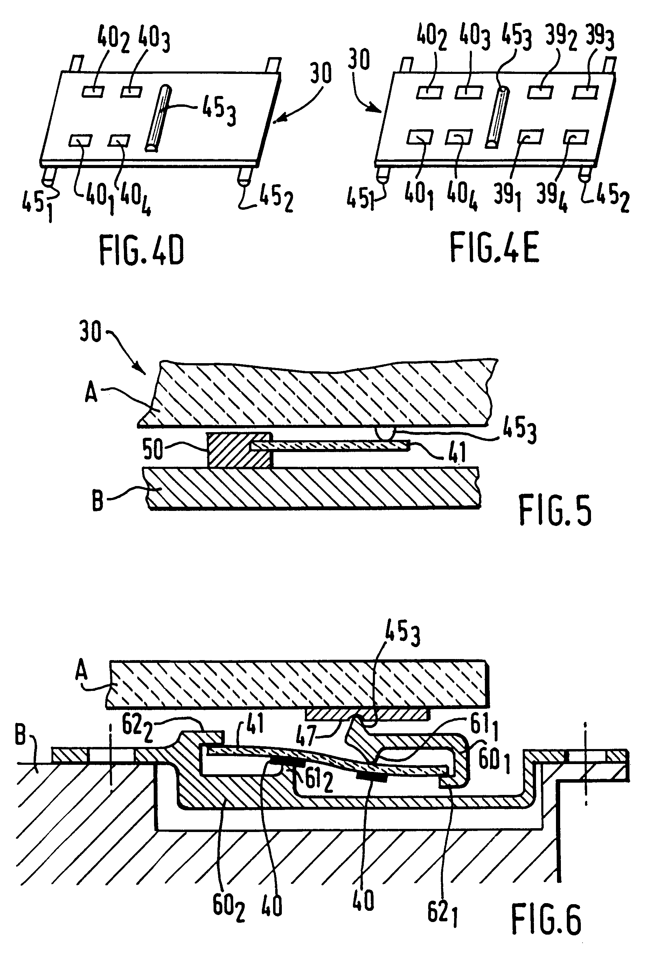

Pour accroître la sensibilité de détection du module 30 il est possible selon le schéma de la figure 4E de doubler le nombre de ponts de Wheastone, les quatre jauges de contraintes $40_1$ à $40_4$ formant un premier pont de Wheastone et les quatre jauges de contraintes $39_1$ à $39_4$ formant un second pont de Wheastone. Les signaux des deux ponts peuvent être ajoutés pour délivrer un rapport signal/force qui soit accru.

Les résistances peuvent être placées sur l'une et/ou l'autre face de la plaquette afin de pouvoir mieux les protéger des détériorations mécanique, thermique ou autres ou d'augmenter la sensibilité.

La figure 5 est une autre réalisation d'un module 30. Dans ce cas la partie B possède une protubérance 50 dans laquelle est pincée la plaquette 41 qui porte des jauges de contraintes. Il s'agit dans ce cas d'un montage en poutre à une extrémité libre. L'appui $45_3$ opère sur l'extrémité libre. Il peut être solidaire soit de la partie A soit de la plaquette 41. La course entre la plaquette 41 et la partie B peut être déterminée afin de limiter la courbure de la plaquette 41 pour éviter qu'elle se casse.

La figure 6 représente un autre mode de réalisation d'un module à jauges de contraintes dans lequel le support 41 subit une déformation en S. Pour cela le support 41 est coincé entre deux étriers $60_1$ et $60_2$ qui sont en contact respectivement avec les parties A et B. Un étrier $60_1$ (respectivement $60_2$) comporte une butée $61_1$ (respectivement $61_2$) qui applique une force sur la surface du substrat à l'écart du bord et un ergot $62_1$ (respectivement $62_2$) qui opère une force de réaction à l'extrémité du substrat. Sous l'action des forces agissantes, le substrat 41 subit une déformation en S. Préférentiellement les résistances 40 sont placées de telle sorte que certaines soient en compression et d'autres en extension afin d'accroître la sensibilité de détection en additionnant leurs effets quand elles sont montées en pont de Wheatstone. Sur la figure 6, la butée $61_2$ porte entre les résistances.

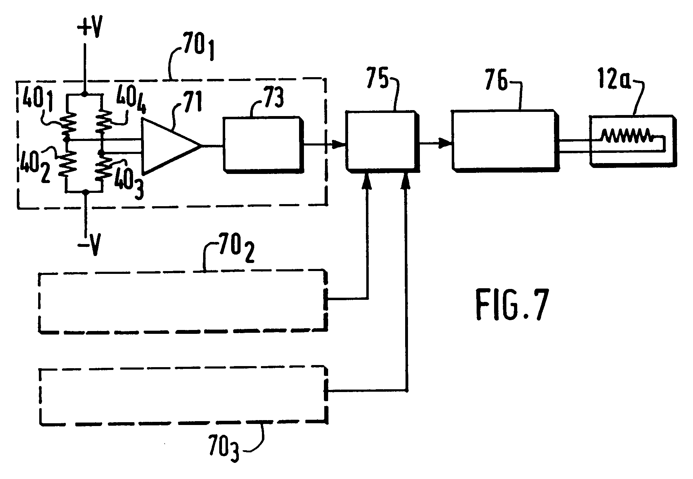

La figure 7 représente les moyens de commandes qui permettent de contrôler le fonctionnement des éléments chauffants. Les jauges de contraintes $40_1$ à $40_4$ sont montées en pont, une branche du pont étant alimentée par une source d'alimentation +V, -V ou par une source de tension alternative, et l'autre branche du pont délivrant le signal de déséquilibre qui est appliqué à l'entrée d'un amplificateur différentiel 71 dont la sortie est numérisée par un convertisseur analogique-numérique 73. Un bloc $70_1$ comprend les jauges de contraintes, l'amplificateur différentiel et le convertisseur A/N. Il y a autant de blocs qu'il y a de modules par exemple les blocs $70_1$, $70_2$, $70_3$ pour une table chauffante munie de trois modules à jauges de contrainte. Les sorties des trois blocs entrent dans une logique de commande par exemple un microprocesseur 75 qui opère la détermination du barycentre. Il garde également la mémoire des données concernant la position et l'intensité des charges appliquées et le fonctionnement de la plaque. Le microprocesseur 75 active une commande de puissance 76 pour chaque élément chauffant par exemple l'élément 12a.

Selon la version simplifiée, les amplificateurs différentiels de chaque bloc 70 activent la commande de puissance 76 sans passer par le traitement numérique du signal. Ainsi par exemple, la variation de signal (réduction) provenant de chaque bloc 70 sera comparée à la somme de tous les signaux des blocs 70. Lorsqu'à l'aide d'un comparateur électronique, la variation d'un de ces signaux est supérieure à un rapport donné, par exemple 45 ou 50%, la commande de puissance 76 est activée.

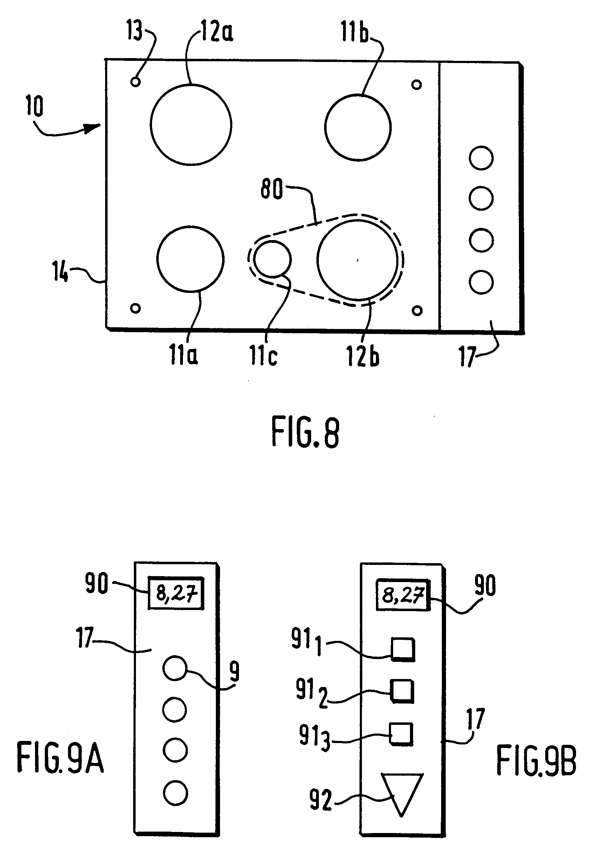

La figure 8 représente une illustration d'un type de disposition des éléments chauffants. En plus des éléments chauffants 11a, 11b, 12a, 12b est représenté un élément chauffant 11c pour illustrer la possibilité de reconfiguration de la table chauffante que permet l'invention. En effet par programmation du microprocesseur le fabricant a la possibilité de prévoir soit de faire opérer les éléments chauffants 11c et 12b indépendamment soit de les faire opérer conjointement. Ceci a l'avantage de permettre la construction de modèles de tables chauffantes différents avec une structure de base identique afin de réaliser des foyers ayant des étendues plus ou moins grandes.

La table chauffante en étant sensible à la charge appliquée peut permettre non seulement de déterminer l'emplacement où la variation de charge a été opérée mais également celle de la variation de poids elle-même. Pour cela des moyens de calculs mémorisent les forces appliquées, donc le poids, (c'est-à-dire les sommes des variations des forces appliquées sur tous les modules à jauges) à deux moments différents et en déduisent la variation de poids qui est affichée sur un dispositif de visualisation. Lorsque les moyens de commande qui déterminent le barycentre sont constitués par un microprocesseur celui-ci peut également constituer les moyens de calcul du poids. Ils peuvent opérer un tarage. La figure 9A représente la zone 17 de commandes manuelles dans laquelle se trouvent les boutons 9. Le dispositif de visualisation 90 est préférentiellement placé dans cette zone.

Selon la disposition de la figure 9B il est également possible de supprimer les boutons de commandes manuelles. En effet la plaque vitrocéramique étant sensible aux forces appliquées il est possible à l'utilisateur d'appuyer sur la plaque vitrocéramique avec la main et d'introduire ainsi une commande manuelle. Les moyens de commande détectant le centre de gravité de la force appliquée, il est possible de discerner des zones d'appui de faible dimension et ainsi de disposer de plusieurs commandes. La figure 9B représente la zone 17 d'introduction de commandes manuelles dans laquelle des endroits $91_1$, $91_2$, $91_3$ sont indiqués sur lesquels l'utilisateur doit appuyer pour entrer ses commandes manuelles. Il peut s'agir de commandes marche-arrêt. Il peut aussi s'agir de commandes graduelles 92. Par exemple la pointe inférieure du triangle représente une commande de puissance faible et le côté supérieur dudit triangle une commande de puissance élevée. Toute autre représentation est possible. La commande peut consister à mesurer la durée ou l'intensité de la pression opérée par l'utilisateur aux endroits repérés (par exemple, des symboles +/-). Ce traitement est effectué par le microprocesseur 75 (figure 7). Par programmation du microprocesseur il est possible d'affecter des coefficients différents aux jauges proches des zones tactiles et des zones de repérage des feux. Après avoir déterminé dans un premier temps que la zone tactile est activée, il est alors possible d'affiner la précision des mesures dans la zone tactile. Ces endroits $91_1$, $91_2$, $91_3$, 92 pour l'entrée de commandes manuel les sont indiquées sur la plaque vitrocéramique par des techniques de sérigraphie ou de peinture ou de toute autre manière.

Les moyens de commandes sont alors programmés pour reconnaître ces différentes commandes tactiles. Le fabricant de telles tables chauffantes a de plus la possibilité d'intervenir sur la configuration de la table chauffante afin de disposer de plusieurs modèles. En effet ces commandes tactiles peuvent être disposées n'importe où sur la plaque vitrocéramique, leurs emplacements étant définis par programmation (hors des endroits chauffés). Il peut ainsi disposer d'une structure de base et l'adapter aux souhaits de la clientèle.

Cette zone 17 à commandes tactiles peut également recevoir l'afficheur 90 par exemple un dispositif électroluminescent pour délivrer les informations de pesage ou autres.

Les zones ainsi délimitées pour les commandes tactiles et pour les foyers peuvent être ainsi programmées pour conduire aux commandes prévues et également pour que toute action sur la surface restante de la plaque vitrocéramique reste inopérante. Ceci permet de mettre à la disposition de l'utilisateur des zones inertes pour d'autres usages.

Sur la figure 8, la zone réservée aux éléments chauffants et celle pour les commandes tactiles sont réparties sur une seule et même plaque vitrocéramique. Mais il est possible de les placer sur deux plaques séparées et indépendantes. Dans ce cas, chacune des deux plaques comporte ses trois (ou quatre) jauges de contraintes. Les deux plaques vitrocéramiques sont reliées entre elles par un joint continu et souple (par exemple en élastomère), pour former une double plaque et permettre son nettoyage sans rencontrer d'aspérité ou de différence de niveau entre les deux zones. Néanmoins les moyens de commande électrique et électronique peuvent avoir des éléments communs en particulier le microprocesseur.

## Revendications

1. Table chauffante (10) comportant une pluralité d'éléments chauffants (11a, 12a) activés par des commandes de fonctionnement qui modifient la puissance électrique dissipée dans les éléments chauffants en fonction de charges placées au-dessus desdits éléments chauffants caractérisée en ce que les éléments chauffants sont recouverts d'une plaque (15) qui est solidaire de modules à jauges de contraintes (30) qui détectent les forces qui sont appliquées à la plaque sous l'action desdites charges, des moyens de commande (70, 75, 76) identifiant, en calculant le barycentre desdites forces, un quelconque élément chauffant ayant subi une variation de sa dite charge, les moyens de commande agissant sur les commandes de fonctionnement de l'élément chauffant identifié pour intervenir sur son alimentation en énergie électrique.

2. Table chauffante selon la revendication 1 caractérisée en ce que les moyens de commande (70, 75, 76) coupent ou réduisent l'alimentation en énergie électrique de l'élément chauffant identifié lorsque sa charge est enlevée.

3. Table chauffante selon la revendication 1 ou 2 caractérisée en ce que les moyens de commande (70,75,76) régulent l'alimentation en énergie électrique de l'élément chauffant identifié lorsque les variations relatives de charge sont faibles.

4. Table chauffante selon une des revendications 1 à 3 pour laquelle la disposition des jauges de contraintes (30) est telle que sans charge extérieure rapportée, la charge principale des jauges de contraintes est formée par le poids de la plaque.

5. Table chauffante selon une des revendications 1 à 4 pour laquelle la disposition des jauges de contraintes (30) est telle que sans charge extérieure rapportée, les jauges de contraintes supportent pratiquement l'ensemble du poids de la table chauffante.

6. Table chauffante selon une des revendications 1 à 5 caractérisée en ce qu'elle comprend soit trois (3a,3b,3c) soit quatre (4a,4b,4c) modules à jauges de contraintes.

7. Table chauffante selon une des revendications 1 à 6 caractérisée en ce qu'au moins un élément chauffant est monté plus près d'une jauge que les autres éléments chauffants afin d'accroître la sensibilité de détection pour cet élément chauffant.

8. Table chauffante selon une des revendications 1 à 7 caractérisée en ce que la variation de charge est traduite en une mesure de poids à l'aide de moyens qui calculent (75) et affichent (90) le poids de la charge.

**9.** Table chauffante selon la revendication 8 caractérisée en ce qu elle comprend des moyens de tarage.

**10.** Table chauffante selon une des revendications 1 à 9 caractérisée en ce que les moyens de commande peuvent être programmés pour déterminer l'étendue d'un foyer en regroupant fonctionnellement plusieurs éléments chauffants.

**11.** Table chauffante selon une des revendications 1 à 10 caractérisée en ce que la plaque présente au moins une zone (17) de commandes tactiles pour opérer manuellement les commandes de fonctionnement.

**12.** Table chauffante selon une des revendications 1 à 10 caractérisée en ce qu elle comprend une plaque placée au-dessus des éléments chauffants selon une des revendications 1 à 10 et une plaque à commandes tactiles.

**13.** Table chauffante selon les revendications 11 ou 12 caractérisée en ce que les moyens de commande peuvent être programmés pour modifier la disposition des commandes tactiles.

**Claims**

**1.** A cook-top (10) comprising a plurality of heating elements (11a, 12a) which are activated by function controls, which vary the electric power dissipated in the heating elements as a function of the loads placed on said heating elements, characterised in that the heating elements are covered by a plate (15) which is fixedly connected to strain-gauge modules (30) which detect the forces exerted on the plate under the influence of said loads, control means (70, 75, 76) identifying such a heating element whose load has been subject to a variation, by computing the barycentre of said forces, the control means acting on the function controls of the identified heating element to influence its electric power supply.

**2.** A cook-top as claimed in Claim 1, characterised in that the control means (70, 75, 76) turn off or reduce the electric power supply to the identified heating element when its load is removed.

**3.** A cook-top as claimed in Claim 1 or 2, characterised in that the control means (70, 75, 76) control the electric power supply to the identified heating element when the relative load variations are small.

**4.** A cook-top as claimed in any one of the Claims 1 to 3, for which the arrangement of the strain gauges (30) is such that without a separate external load the principal load of the strain gauges is formed by the weight of the plate.

**5.** A cook-top as claimed in any one of the Claims 1 to 4, for which the arrangement of the strain gauges (30) is such that without a separate external load the strain gauges support substantially the entire weight of the cook-top.

**6.** A cook-top as claimed in any one of the Claims 1 to 5, characterised in that it comprises either three (3a, 3b, 3c) or four (4a, 4b, 4c) strain-gauge modules.

**7.** A cook-top as claimed in any one of the Claims 1 to 6, characterised in that at least one heating element is arranged closer to one of the strain gauges than the other heating elements in order to increase the detection sensitivity for this heating element.

**8.** A cook-top as claimed in any one of the Claims 1 to 7, characterised in that the load variation is converted into a measure of the weight by means which compute (75) and display (90) the weight of the load.

**9.** A cook-top as claimed in Claim 8, characterised in that it comprises taring means.

**10.** A cook-top as claimed in any one of the Claims 1 to 9, characterised in that the control means can be programmed to determine the size of a cooking area by functionally rearranging a plurality of heating elements.

**11.** A cook-top as claimed in any one of the Claims 1 to 10, characterised in that the plate has at least one touch-control zone (17) for manual actuation of the function controls.

**12.** A cook-top as claimed in any one of the Claims 1 to 10, characterised in that it comprises a plate arranged above heating elements in accordance with any one of the Claims 1 to 10 and a plate with touch controls.

**13.** A cook-top as claimed in Claim 11 or 12, characterised in that the control means can be programmed to modify the arrangement of the touch controls.

**Patentansprüche**

**1.** Heizplatte (10) mit mehreren Heizelementen (11a, 12a), die durch Funktionssteuerungsvorrichtungen aktiviert werden, welche die in den Heizelementen verbrauchte elektrische Leistung in Abhängigkeit von auf die genannten Heizelemente plazierten Lasten verändern, dadurch gekennzeichnet, daß die genannten Heizelemente mit einer Deckplatte (15) bedeckt sind, die mit Modulen mit Dehnungsstreifen (30) fest verbunden ist, welche die auf die genannte Deckplatte unter der Wirkung der genannten Lasten ausgeübte Kraft detektieren, wobei Steuerungsmittel (70, 75, 76) ein solches Heizelement, das eine Veränderung seiner genannten Last erfahren hat, identifizieren, indem sie den Schwerpunkt der genannten Lasten berechnen, wobei die Steuerungsmittel auf die Funktionssteuerungsvorrichtungen des identifizierten Heizelements einwirken, um seine Versorgung mit elektrischer Energie zu beeinflussen.

**2.** Heizplatte nach Anspruch 1, dadurch gekennzeichnet, daß die Steuerungsmittel (70, 75, 76) die Versorgung des identifizierten Heizelementes mit elektrischer Energie reduzieren oder unterbrechen, wenn dessen Last entfernt wird.

**3.** Heizplatte nach Anspruch 1 oder 2, dadurch gekennzeichnet, daß die Steuerungsmittel (70, 75, 76) die elektrische Speisung zu dem betreffenden Heizelement steuern, wenn die relativen Belastungsschwankungen gering sind.

**4.** Heizplatte nach Anspruch 1 bis 3, für welche die Anordnung der Dehnungsstreifen (30) derart ist, daß ohne Einwirkung einer äußeren Last, die Hauptbelastung der Dehnungsstreifen durch das Gewicht der Glaskeramikplatte gebildet wird.

**5.** Heizplatte nach einem der Ansprüche 1 bis 4, wobei die Anordnung der Dehungsstreifen (30) derart ist, daß ohne Einwirkung einer äußeren Last, die Dehnungsstreifen das gesamte Gewicht der Heizplatte tragen.

**6.** Heizplatte nach einem der Ansprüche 1 bis 5, dadurch gekennzeichnet, daß sie entweder drei (3a, 3b, 3c) oder vier (4a, 4b, 4c) Dehnungsstreifenmodule enthält.

**7.** Heizplatte nach einem der Ansprüche 1 bis 6, dadurch gekennzeichnet, daß wenigstens ein heizelement näher bei einem der Dehnungsstreifen vorgesehen ist als die anderen Heizelemente, damit die Detektionsempfindlichkeit für dieses Heizelement gesteigert wird.

**8.** Heizplatte nach einem der Ansprüche 1 bis 7, dadurch gekennzeichnet, daß die Laständerung in einen Meßwert des Gewichtes umgewandelt wird, und zwar durch Mittel, die das Gewicht der Last berechnen (75) und wiedergeben (90).

**9.** Heizplatte nach Anspruch 8, dadurch gekennzeichnet, daß sie Tarierungsmittel aufweist.

**10.** Heizplatte nach einem der Ansprüche 1 bis 9, dadurch gekennzeichnet, daß die Steuerungsmittel derart programmiert werden können, daß sie die Größe eines Kochgebietes berechnen, und zwar dadurch, daß auf funktionelle Weise einige Heizelemente neugegliedert werden.

**11.** Heizplatte nach einem der Ansprüche 1 bis 10, dadurch gekennzeichnet, daß die Platte wenigstens eine Berührungszone (17) zur manuellen Bedienung der Funktionsregler aufweist.

**12.** Heizplatte nach einem der Ansprüche 1 bis 10, <u>dadurch gekennzeichnet</u>, daß sie eine Platte aufweist, die über den Heizelementen vorgesehen ist, nach einem der Ansprüche 1 bis 10 und eine Platte mit Berührungsreglern.

**13.** Heizplatte nach Anspruch 11 oder 12, <u>dadurch gekennzeichnet</u>, daß die Steuerungsmittel derart programmiert werden können, daß die Anordnung der Berührungsregler geändert wird.

FIG.1A

FIG.2A

FIG.2B

FIG.2C

FIG.1B

EP 0 464 925 B1

FIG.3A

FIG.3B

FIG.3C

EP 0 464 925 B1

FIG.3D

FIG.4A

FIG.4B

FIG.4C

15

FIG.4D

FIG.4E

FIG.5

FIG.6

FIG.7

EP 0 464 925 B1

FIG.8

FIG.9A

FIG.9B